# EUROPEAN PATENT APPLICATION

(11) **EP 4 451 196 A1**
(43) Date of publication of application: **23.10.2024**
(21) Application number: 22906586.7
(22) Date of filing: 14.12.2022
(51) Int. Cl.: G06Q 40/04, G06Q 40/12

(54) **BLOCKCHAIN-BASED RECONCILIATION METHOD, APPARATUS, AND SYSTEM**

(30) Priority: 15.12.2021 CN 202111537494; 15.12.2021 CN 202111537495
(71) Applicant: DIGITAL CURRENCY INSTITUTE, THE PEOPLE'S BANK OF CHINA, Beijing 100071 (CN)
(72) Inventor: MU, Changchun, Beijing 100071 (CN); DI, Gang, Beijing 100071 (CN); LI, Honggang, Beijing 100071 (CN); LV, Yuan, Beijing 100071 (CN); QIAN, Youcai, Beijing 100071 (CN); ZHANG, Mingming, Beijing 100071 (CN); LIU, Jiequn, Beijing 100071 (CN); CHEN, Xuanhui, Beijing 100071 (CN); CHEN, Qingjie, Beijing 100071 (CN); HUANG, Wei, Beijing 100071 (CN); WANG, Huan, Beijing 100071 (CN)
(74) Representative: Viering, Jentschura & Partner mbB Patent- und Rechtsanwälte
(86) International application number: PCT/CN2022/138861
(87) International publication number: WO 2023/109841

(57) **Abstract**

Disclosed in the disclosure are a reconciliation method, apparatus and system based on a blockchain, relating to the technical field of blockchains. A specific embodiment of the method includes: acquiring a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively; performing first comparison on the batch hash values; notifying the institution and the transaction reconciliation platform to feed shard hash values corresponding to the reconciliation batch transaction record under the condition that a result of the first comparison shows inconsistence; acquiring an inconsistent shard by performing second comparison on the shard hash values; notifying the institution and the transaction reconciliation platform to feed record hash values onto the blockchain; acquiring an inconsistent transaction record by performing third comparison on the record hash values; and notifying the institution and the transaction reconciliation platform of the inconsistent transaction record. According to the embodiment, a storage space of a blockchain can be saved; reconciliation efficiency is greatly improved, and a reconciliation result cannot be tampered with; and the problem of data privacy on a chain is solved.

## Description

### Cross-Reference to Related Application

The disclosure claims the priority to Chinese patent application No. 202111537495.8, filed on December 15, 2021 and entitled "Reconciliation method, apparatus and system based on blockchain" and Chinese patent application No. 202111537494.3, filed on December 15, 2021 and entitled "Reconciliation method and apparatus based on blockchain", and the disclosed contents of the above-mentioned Chinese patent applications are incorporated herein by reference in their entireties as part or in whole of the disclosure.

### Technical Field

The present disclosure relates to the technical field of blockchains, and in particular relates to a reconciliation method, apparatus and system based on a blockchain.

### Background

For inter-institutional transactions, an inter-institutional transaction supporting platform such as UnionPay (referred to in the present disclosure as institution C) assumes the role of transferring a transaction and presuming the final state of the transaction. For example, there is an inter-bank transfer business from institution A to institution B with a transfer amount of 6 yuan. The inter-bank transfer business will generate businesses in all the three systems. That is to say, a business of payment of 6 yuan from institution A to institution B is generated in institution A, a business of collection of 6 yuan from institution A by institution B is generated in institution B, and a business of payment of 6 yuan from institution A to institution B is generated in platform C. After the transaction is closed, a reconciliation system is needed to ensure that the transaction actually occurred and was executed correctly. The reconciliation system is a system whereby the three transaction participants compare their accounts with each other so that they can balance their own account information. For example, institution A and institution B reconcile their transactions with platform C respectively, and the transaction data of platform C shall prevail.

Existing reconciliation is that platform C stores transaction data on a blockchain node of platform C. The blockchain node of platform C and blockchain nodes of institutions A and B form an alliance chain. By using a data synchronization function of the blockchain node itself, the blockchain nodes of institutions A and B may access the data stored on the blockchain node of platform C, and the data cannot be tampered with once it is fed onto the blockchain successfully. The blockchain nodes of institutions A and B compare the synchronized data with the transaction data recorded by themselves, and then conduct subsequent error handling through an error handling system based on comparison results.

However, the inventors found that existing reconciliation systems have data privacy issues, blockchain storage space issues, reconciliation efficiency issues, and tamperability of reconciliation results.

### Summary

In view of this, examples of the present disclosure provide a reconciliation method, apparatus and system based on a blockchain. A storage space of the blockchain can be saved, and an influence caused by insufficient blockchain performance can be greatly reduced and mitigated. A blockchain-based smart contract program can complete automatic comparison and automatic error handling, which greatly improves efficiency, and a reconciliation result cannot be tampered with. Moreover, since only hash data is stored on a chain, hash has a function of not being able to reverse original data, and an on-chain data privacy problem is solved through the feature of hash.

In order to achieve the above objective, according to an aspect of the examples of the present disclosure, a reconciliation method based on a blockchain is provided. A reconciliation method based on a blockchain includes: acquiring a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, wherein the batch hash values are generated according to the reconciliation batch transaction records; performing first comparison on the batch hash value fed onto the blockchain by the institution and the batch hash value fed onto the blockchain by the transaction reconciliation platform; notifying the institution and the transaction reconciliation platform to feed shard hash values corresponding to the reconciliation batch transaction record onto the blockchain under a condition that a result of the first comparison shows that the batch hash value fed onto the blockchain by the institution and the batch hash value fed onto the blockchain by the transaction reconciliation platform are inconsistence, wherein the shard hash values are obtained by sharding the reconciliation batch transaction record, and generating, for each shard, a shard hash value of the shard according to transaction records included in the shard; acquiring an inconsistent shard by performing second comparison on the shard hash values fed onto the blockchain by the institution and the shard hash values fed onto the blockchain by the transaction reconciliation platform; notifying the institution and the transaction reconciliation platform to feed a record hash value corresponding to each transaction record included in the inconsistent shard; acquiring an inconsistent transaction records by performing third comparison on the record hash values fed onto the blockchain by the institution and the record hash values fed onto the blockchain by the transaction reconciliation platform; and notifying the institution and the transaction reconciliation platform of the inconsistent transaction record.

According to another aspect of the examples of the present disclosure, a reconciliation method based on a blockchain is provided. The reconciliation method based on a blockchain includes: triggering, in response to receiving shard hash values of data to be reconciled fed onto the blockchain by reconciliation participants, a smart contract to perform comparison of the shard hash values, wherein the smart contract is deployed on the blockchain in advance, and the shard hash values are obtained by performing hash operation on each shard after sharding the data to be reconciled; notifying the reconciliation participants to feed record hash values of transaction records included in an inconsistent shard onto the blockchain under the condition that a result of the comparison of the shard hash values shows inconsistence; and triggering, in response to receiving the record hash values fed onto the blockchain by the reconciliation participants, the smart contract to perform comparison of record hash values, so as to find an inconsistent transaction record, and generating a reconciliation result.

According to another aspect of the examples of the present disclosure, a reconciliation apparatus based on a blockchain is provided. The reconciliation apparatus based on a blockchain includes: a batch hash acquiring module, configured to obtain a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, wherein the batch hash values are generated according to the reconciliation batch transaction record; a batch hash comparing module, configured to perform first comparison on the batch hash value fed onto the blockchain by the institution and the batch hash value fed onto the blockchain by the transaction reconciliation platform; a shard hash feeding module, configured to notify the institution and the transaction reconciliation platform to feed shard hash values corresponding to the reconciliation batch transaction record onto the blockchain under the condition that the a result of the first comparison shows that the batch hash value fed onto the blockchain by the institution and the batch hash value fed onto the blockchain by the transaction reconciliation platform are inconsistence, wherein the shard hash values are obtained by sharding the reconciliation batch transaction record, and generating, for each shard, a shard hash value of the shard according to transaction records included in the shard; a shard hash comparing module, configured to acquire an inconsistent shard by performing second comparison on the shard hash values fed onto the blockchain by the institution and the shard hash values fed onto the blockchain by the transaction reconciliation platform; a record hash feeding module, configured to notify the institution and the transaction reconciliation platform to feed a record hash value corresponding to each transaction record included in the inconsistent shard onto the blockchain; a record hash comparing module, configured to acquire an inconsistent transaction record by performing third comparison on the record hash values fed onto the blockchain by the institution and the record hash values fed onto the blockchain by the transaction reconciliation platform; and a transaction record notifying module, configured to notify the institution and the transaction reconciliation platform of the inconsistent transaction record.

According to yet another aspect of the examples of the present disclosure, a reconciliation apparatus based on a blockchain is provided. The reconciliation apparatus based on a blockchain includes: a shard hash comparing module, configured to trigger, in response to receiving shard hash values of data to be reconciled fed onto the blockchain by a reconciliation participant, a smart contract to perform comparison of the shard hash values, wherein the smart contract is deployed on the blockchain in advance, and the shard hash values are obtained by performing hash operation on each shard after sharding the data to be reconciled; a detail hash acquiring module, configured to notify the reconciliation participant to feed a record hash value of a transaction record included in an inconsistent shard under the condition that a result of the comparison of the shard hash values shows inconsistence; and a detail hash comparing module, configured to trigger, in response to receiving the record hash value fed onto the blockchain by the reconciliation participant, the smart contract to perform comparison of record hash values, so as to find an inconsistent transaction record, and generate a reconciliation result.

According to yet another aspect of the examples of the present disclosure, a reconciliation method based on a blockchain is provided. A reconciliation method based on a blockchain includes: feeding, by an institution to be reconciled and a transaction reconciliation platform, batch hash values corresponding to reconciliation batch transaction record respectively onto the blockchain, wherein the batch hash values are generated according to reconciliation batch transaction record; triggering a smart contract to acquire the batch hash values fed onto the blockchain by the institution and the transaction reconciliation platform respectively in response to a reconciliation processing instruction, and performing first comparison on the batch hash value fed onto the blockchain by the institution and the batch hash value fed onto the blockchain by the transaction reconciliation platform; notifying the institution and the transaction reconciliation platform to feed shard hash values corresponding to the reconciliation batch transaction record onto the blockchain under the condition that a result of the first comparison shows that the batch hash value fed onto the blockchain by the institution and the batch hash value fed onto the blockchain by the transaction reconciliation platform are inconsistence; feeding the shard hash values by the institution and the transaction reconciliation platform onto the blockchain, wherein the shard hash values are obtained by sharding the reconciliation batch transaction record, and generating, for each shard, a shard hash value of the shard according to transaction records included in the shard; acquiring, in response to receiving the shard hash values, an inconsistent shard by the smart contract performing second comparison on the shard hash values fed onto the blockchain by the institution and the shard hash values fed onto the blockchain by the transaction reconciliation platform; notifying the institution and the transaction reconciliation platform to feed a record hash value corresponding to each transaction record included in the inconsistent shard onto the blockchain; feeding, by the institution and the transaction reconciliation platform, the record hash values onto the blockchain; acquiring, in response to receiving the record hash values, an inconsistent transaction record by the smart contract performing third comparison on the record hash values fed onto the blockchain by the institution and the record hash values fed onto the blockchain by the transaction reconciliation platform; and notifying the institution and the transaction reconciliation platform of the inconsistent transaction record.

According to yet another aspect of the examples of the present disclosure, a reconciliation system based on a blockchain is provided. The reconciliation system based on a blockchain includes an institution and a transaction reconciliation platform, wherein a smart contract is deployed on the transaction reconciliation platform; the institution and the transaction reconciliation platform are configured to feed batch hash values corresponding to a reconciliation batch transaction record onto the blockchain; feed, when receiving a notification from the smart contract to feed shard hash values corresponding to the reconciliation batch transaction record onto the blockchain, the shard hash values onto the blockchain; and feed, when receiving a notification from the smart contract to feed a record hash value corresponding to each transaction record included in inconsistent shard onto the blockchain, the record hash values onto the blockchain, wherein the batch hash values are generated according to the reconciliation batch transaction record; and the shard hash values are obtained by sharding the reconciliation batch transaction record, and generating, for each shard, a shard hash value of the shard according to transaction records included in the shard; and the smart contract is configured to respectively acquire a batch hash value fed onto the blockchain by the institution and a batch hash value fed onto the blockchain by the transaction reconciliation platform in response to a reconciliation processing instruction, and perform first comparison on the batch hash value fed onto the blockchain by the institution and the batch hash value fed onto the blockchain by the transaction reconciliation platform; notify the institution and the transaction reconciliation platform to feed shard hash values corresponding to the reconciliation batch transaction record onto the blockchain under the condition that a result of the first comparison shows that the batch hash value fed onto the blockchain by the institution and the batch hash value fed onto the blockchain by the transaction reconciliation platform are inconsistence; acquire an inconsistent shard in response to receiving the shard hash values and by performing second comparison on the shard hash values fed onto the blockchain by the institution and the shard hash values fed onto the blockchain by the transaction reconciliation platform; notify the institution and the transaction reconciliation platform to feed a record hash value corresponding to each transaction record included in the inconsistent shard onto the blockchain; acquire an inconsistent transaction record in response to receiving the record hash values and by performing third comparison on the record hash value fed onto the blockchain by the institution and the record hash value fed onto the blockchain by the transaction reconciliation platform; and notify the institution and the transaction reconciliation platform of the inconsistent transaction record.

According to yet another aspect of the examples of the present disclosure, an electronic reconciliation device based on a blockchain is provided. The electronic reconciliation device based on a blockchain includes: one or more processors; and a memory configured to store one or more programs. When the one or more programs are executed by the one or more processors, the one or more processors implement the reconciliation method based on a blockchain provided in the examples of the present disclosure.

According to still another aspect of the examples of the present disclosure, a computer-readable medium is provided. The computer-readable medium stores a computer program. The program implements the reconciliation method based on a blockchain provided in examples of the present disclosure when executed by a processor.

An example of the present disclosure has the following advantages or beneficial effects. a batch hash value corresponding to a reconciliation batch transaction record fed onto the blockchain by an institution to be reconciled and a batch hash value corresponding to a reconciliation batch transaction record fed onto the blockchain by a transaction reconciliation platform are acquired respectively; first comparison is performed on the batch hash values; the institution and the transaction reconciliation platform are notified to feed shard hash values corresponding to the reconciliation batch transaction record onto the blockchain under the condition that a result of the first comparison shows that the batch hash value fed onto the blockchain by the institution to be reconciled and the batch hash value fed onto the blockchain by the transaction reconciliation platform are inconsistence; an inconsistent shard is acquired by performing second comparison on the shard hash values; the institution and the transaction reconciliation platform feed a record hash value corresponding to each transaction record included in the inconsistent shard onto the blockchain; an inconsistent transaction record is acquired performing third comparison on the record hash values; and the institution and the transaction reconciliation platform are notified of the inconsistent transaction record. According to such a technical solution, a storage space of the blockchain can be saved, and an influence caused by insufficient blockchain performance can be greatly reduced and mitigated. A blockchain-based smart contract program can complete automatic comparison and automatic error handling, which greatly improves efficiency, and a reconciliation result cannot be tampered with. Moreover, since only hash data is stored on a chain, hash has a function of not being able to reverse original data, and an on-chain data privacy problem is solved through the feature of hash.

Further effects of the non-conventional alternatives described above are explained below in connection with the detailed embodiments.

### Brief Description of the Drawings

The drawings serve for a better understanding of the present disclosure and are not to be construed as limiting the present disclosure. In the figures,
Fig. 1 is a schematic diagram of main steps of a reconciliation method based on a blockchain according to an example of the present disclosure;
Fig. 2 is a block diagram of a reconciliation system according to an example of the present disclosure;
Fig. 3 is a schematic diagram of a reconciliation process according to an example of the present disclosure;
Fig. 4 is a schematic diagram of main modules of a reconciliation apparatus based on a blockchain according to an example of the present disclosure;
Fig. 5 is a schematic diagram of main steps of a reconciliation method based on a blockchain according to another example of the present disclosure;
Fig. 6 is a schematic diagram of main steps of a reconciliation method based on a blockchain according to yet another example of the present disclosure;
Fig. 7 is a schematic diagram of automatic reconciliation data layer interaction according to yet another example of the present disclosure;
Fig. 8 is a schematic diagram of an automatic reconciliation process based on shards according to yet another example of the present disclosure;
Fig. 9 is a schematic diagram of main modules of a reconciliation apparatus based on a blockchain according to yet another example of the present disclosure;
Fig. 10 is a diagram of an illustrative system architecture to which examples of the present disclosure may be applied; and
Fig. 11 is a schematic structural diagram of a computer system of a terminal device or server suitable for implementing an example of the present disclosure.

### Detailed Description of the Embodiments

Illustrative examples of the present disclosure are described below in conjunction with the accompanying drawings, in which various details of the examples of the present disclosure are included to assist in understanding, and are to be regarded as merely illustrative. Therefore, those of ordinary skill in the art will recognize that various changes and modifications may be made to the examples described herein without departing from the scope and spirit of the present disclosure. Also, descriptions of well-known functions and constructions are omitted from the following description for clarity and conciseness.

In the description of the examples of the present disclosure, some terms involved are explained as follows.

Digital currency: the digital currency is a legal currency in a digital form issued by the central bank, operated by designated operating institutions, and based on a broad account system, supports a loose coupling function of a bank account, is equivalent to physical currency, and has value characteristics and legal compensation.

Interconnection platform: the interconnection platform is a digital currency financial infrastructure established by the central bank, and responsible for issuing digital currency to commercial banks which serve as designated operating institutions and performing full life cycle management.

Operating institution: the operating institution refers to a commercial bank authorized by the central bank to provide digital currency exchange and circulation services directly for the public.

Cooperative bank: the cooperative bank refers to a commercial bank that is not an operating institution. Under the premise of centralized management by the central bank, the cooperative bank can cooperate with an operating institution to jointly provide circulation services for the public.

Accepting institution: the accepting institution refers to an institution that provides merchants with services for accepting digital currency consumption transactions, and may be a third-party payment institution, a commercial bank or a merchant with platform characteristics and public utilities.

Smart contract: the smart contract is a computer protocol designed to propagate, verify or execute a contract in an information-based manner. The smart contract allows trusted transactions without a third party, and these transactions are traceable and irreversible.

There are three problems in design of existing reconciliation systems based on a blockchain.
1. Since blockchain data is completely equal and shared between nodes, and the data onto the blockchain is transaction detail data, although original data is encrypted by a symmetric key, a risk that the symmetric key is cracked to obtain all transaction detail data of institutions other than the present institution still exists. This is the first problem: data privacy problem.
2. More third-party partners will achieve access in case of supporting a transaction reconciliation platform, with initial statistics reaching a scale of thousands. In case that an inter-institutional transaction is copied to each institution and then stored onto the blockchain, there will be a bottleneck in a storage space of a blockchain. This is the second problem: blockchain storage space problem.
3. An existing reconciliation has a process that an institution acquires data from a blockchain of a transaction reconciliation platform and then compares the data off the chain. A basically same reconciliation logic is repeated between partners of operating institutions and the transaction reconciliation platform. This is the third problem: reconciliation efficiency problem.
4. Due to an offline reconciliation, a reconciliation process of an institution cannot be audited and verified. This is the fourth problem: a reconciliation result can be tampered with.

In order to solve the technical problems existing in the related art, the present disclosure provides a reconciliation method based on a blockchain, which can solve the data privacy problem, optimize storage, have high reconciliation efficiency, and has a reconciliation result which cannot be tampered with. Each of blockchains of an institution and a transaction reconciliation platform in a reconciliation system in the present disclosure includes two parts of a blockchain node and a feed system. The blockchain node is built based on a consortium blockchain, supports Turing complete smart contract operation, and drives a change of ledger data by calling a smart contract. The change of ledger data needs to be completed through a consensus algorithm, to achieve consistency of a ledger. The blockchain nodes are divided into two types of consensus nodes and read-only nodes. The consensus node participates in consensus, that is, the consensus node is able to write to the ledger to drive a state change of the ledger. The read-only node only has a data read permission, that is, the read-only node has a function of synchronizing data from the consensus node. The number of the read-only nodes is not able to be greater than f = (N - 1)/3, where N is the total number of the blockchain nodes. The feed system of the blockchain performs onto-chain and off-chain interact with the blockchain node according to three dimensions of batch summary → shard summary → shard detail in sequence of the reconciliation batch transaction records. An implementation principle of a process of performing onto-chain and off-chain interaction in the present disclosure according to the above deduction logic is described in detail below.

With a transaction reconciliation once per hour as an instance, transaction records per hour form a batch. Since a transaction initiation time point is carried in detailed data of each transaction record, and the time is the same in the three parties (an institution ends and a transaction reconciliation platform end), the transaction records may be sharded based on the transaction initiation time. Sharding rules may be dynamically adjusted according to specific business needs, but the sharding rules of a same batch of transaction records at the institution ends and the transaction reconciliation platform end should be consistent. For example, sharding is performed according to the transaction initiation time, and every 10 minutes is regarded as a shard, such that transaction records within an hour may be divided into 6 shards in total, and each shard of data carries detailed data of the transaction records belonging to the shard. After that, a record hash value may be obtained by performing hash operation on detailed data of each transaction record included in each shard. Then the record hash values of all transaction records included in the shard are spliced to obtain a shard hash value of the shard. Then, one batch hash value based on hours is obtained by splicing the shard hash values. The detailed data of a transaction record includes, for example, a batch number, a transaction initiation time, a message number, a message identification number, an initiation institution, a payment institution, a collection institution, an amount, a business state, etc.

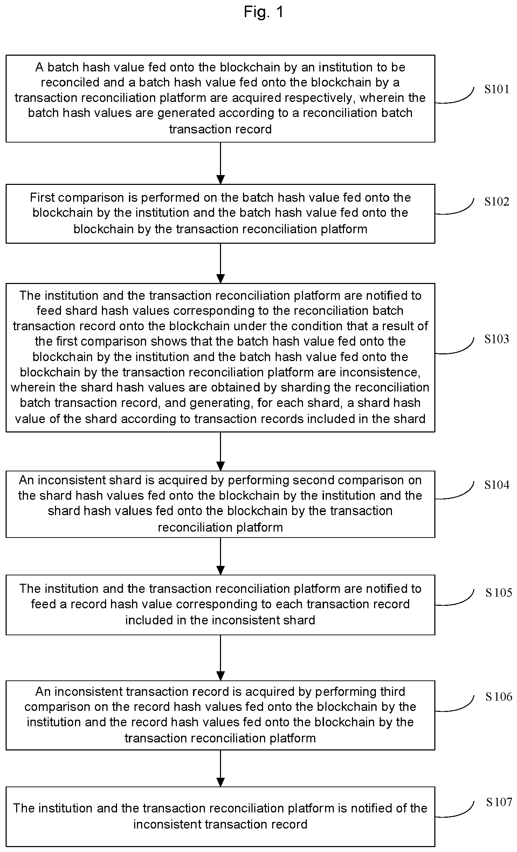

Fig. 1 is a schematic diagram of main steps of a reconciliation method based on a blockchain according to an example of the present disclosure. As shown in Fig. 1, the reconciliation method based on a blockchain according to an example of the present disclosure mainly includes S101-S107.

S101: a batch hash value fed onto the blockchain by an institution to be reconciled and a batch hash value fed onto the blockchain by a transaction reconciliation platform are acquired respectively, wherein the batch hash values are generated according to a reconciliation batch transaction records;

S102: first comparison is performed on the batch hash value fed onto the blockchain by the institution and the batch hash value fed onto the blockchain by the transaction reconciliation platform;

S103: the institution and the transaction reconciliation platform are notified to feed shard hash values corresponding to the reconciliation batch transaction record under the condition that a result of the first comparison shows that the batch hash value fed onto the blockchain by the institution to be reconciled and the batch hash value fed onto the blockchain by the transaction reconciliation platform are inconsistence, wherein the shard hash values are obtained by sharding the reconciliation batch transaction record, and generating, for each shard, a shard hash value of the shard according to transaction records included in the shard;

S104: an inconsistent shard is acquired by performing second comparison on the shard hash values fed onto the blockchain by the institution and the shard hash values fed onto the blockchain by the transaction reconciliation platform;

S105: the institution and the transaction reconciliation platform are notified to feed a record hash value corresponding to each transaction record included in the inconsistent shard;

S106: an inconsistent transaction record is acquired by performing third comparison on the record hash values fed onto the blockchain by the institution and the record hash values fed onto the blockchain by the transaction reconciliation platform; and

S107: the institution and the transaction reconciliation platform are notified of the inconsistent transaction record.

In the example of the present disclosure, one reconciliation batch transaction record is, for example, one batch of transaction records in a last hour, and the batch hash value is a hash value corresponding to the reconciliation batch transaction record. Then, one reconciliation batch transaction record is sharded, and a shard hash record is generated according to all transaction records included in the shard. In the example of the present disclosure, reconciliation is implemented by feeding the batch hash value and the shard hash value onto the blockchain and comparing the fed batch hash value and the shard hash value. Transaction data between institutions cannot be obtained even if data is obtained from the blockchain node, such that the data privacy problem is solved, and data privacy in the blockchain node is improved.

According to a technical solution of the examples of the present disclosure, before the acquiring a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, the batch hash values corresponding to the reconciliation batch transaction record is fed onto the blockchain by the institution and the transaction reconciliation platform. When the batch hash value, the subsequent shard hash value and the subsequent record hash value are feed onto the blockchain, a smart contract of the blockchain node may be called to store the batch hash value, the shard hash value and the record hash value onto an attribute of the smart contract of the blockchain node. In the example of the present disclosure, the blockchain node is built based on a consortium blockchain, such that the blockchain node is able to support smart contract operation, and read, calculate and change the transaction record by means of the smart contract. When the smart contract is executed, the smart contract calculates and compares the batch hash values and the shard hash values corresponding to the transaction records through a consensus algorithm. The batch hash values, the shard hash values and the record hash values of the transaction records are compared by means of the smart contract, such that reconciliation processing based on a same operation logic on the blockchain is implemented, which not only solves the problem of low reconciliation efficiency caused by the need for onto-chain and off-chain reconciliations, but also solves the problem of tampering with a reconciliation result. Reconciliation efficiency is improved, and accuracy of the reconciliation result is guaranteed.

In an example of the present disclosure, the batch hash value is obtained by sequentially splicing the shard hash values corresponding to all shards included in the reconciliation batch transaction record. The shard hash value is obtained by sequentially splicing the record hash values obtained by performing hash operation on each transaction record included in the shard. Those skilled in the art should know that when the batch hash value and the shard hash value in the present disclosure are used to determine whether the transaction records of the institution and the transaction records of the transaction reconciliation platform are consistent, the batch hash value may be obtained by directly performing hash operation on the reconciliation batch transaction records, or the shard hash value may also be obtained by directly performing hash operation on the transaction records included in the shard, which does not influence implementation of the technical solution of the present disclosure.

In an example of the present disclosure, the transaction record has a transaction initiation time point, and the reconciliation batch transaction records are sorted and sharded based on the transaction initiation time point. For example, a reconciliation batch is one batch of transaction records set within a last hour. According to transaction initiation time points of the transaction records, the transaction records with different transaction initiation time points may be sharded. When record hash values corresponding to the transaction records are spliced, the transaction records may be sorted according to the transaction initiation time points of the transaction records, and then the record hash values are spliced in sequence. Similarly, when the shard hash values are spliced, shards are sorted according to the transaction initiation time points of the transaction records corresponding to each shard, and then the shard hash values are spliced in sequence.

According to another example of the present disclosure, the shard hash values are fed onto a blockchain node in a form of a list. Moreover, when the shard hash value of the blockchain node of the institution is compared with the shard hash value of the transaction reconciliation platform, comparison may be performed by performing Cartesian product operation on a shard hash value list of the blockchain node of the institution and a shard hash value list of the transaction reconciliation platform. The inconsistent shard may be obtained by comparing the shard hash values, and then different transaction records may be obtained by further comparing the transaction reconciliation platform of the record hash value corresponding to each transaction record included in the inconsistent shard. After the transaction reconciliation platform, the institution and the transaction reconciliation platform may be notified of the inconsistent transaction record.

According to an example of the present disclosure, after the institution and the transaction reconciliation platform are notified of the inconsistent transaction record, the inconsistent transaction records may further be sent to an off-chain automatic error handling system by means of the transaction reconciliation platform, such that the automatic error handling system calls an error handling interface provided by the institution to perform error handling, and feeds back an error handling result to the transaction reconciliation platform. Finally, the transaction reconciliation platform feeds the error handling result onto the blockchain, and saves the error handling result to the blockchain node.

According to another example of the present disclosure, after the step of acquiring the inconsistent transaction record, a classification to which the inconsistent transaction record belongs may further be determined; the institution and the transaction reconciliation platform may be notified of the classification to which the inconsistent transaction record belongs; and the classification to which the inconsistent transaction record belongs may be sent to the automatic error handling system by means of the transaction reconciliation platform. By classifying the inconsistent transaction record, processing efficiency of the institutional end and transaction reconciliation platform can be improved, and error handling efficiency of the automatic error handling system can be improved. When the inconsistent transaction record is classified, a classification standard between various institutions and transaction reconciliation platform may be followed, for example, the inconsistent transaction record may be classified into food payment, tourism payment, entertainment payment, etc. In this way, it is easier for institutions and transaction reconciliation platforms to search for which particular business has failed or errors, such that efficiency of error handling is improved, and probability of errors recurring is reduced.

According to the technical solution of the present disclosure, one hash value only has 32 bytes, while an original transaction record may have 104 bytes. After using the solution, with a reconciliation error rate of 10% as an example, taking one shard as ten thousand pieces of transaction data as an example, a saved space is calculated as follows: a blockchain space in the related art occupies: 104 bytes * 10000 = 1040000 bytes; and a blockchain space of the solution occupies: 32 + 10% * 10000 * 32 = 32032 bytes. A saved space = 1 - 32032/1040000 = 96.92%. That is to say, the solution performs calculation according to the reconciliation error rate of 10% and an algorithm with 10,000 transactions per shard, which saves about 96.92% of a blockchain storage space compared with an original solution, and an influence caused by insufficient blockchain performance can be greatly reduced and mitigated. A blockchain-based smart contract program can complete automatic comparison and automatic error handling, which greatly improves efficiency, and a reconciliation result cannot be tampered with. Moreover, since only hash data is stored on a chain, hash has a function of not being able to reverse original data, and an on-chain data privacy problem is solved through the feature of hash.

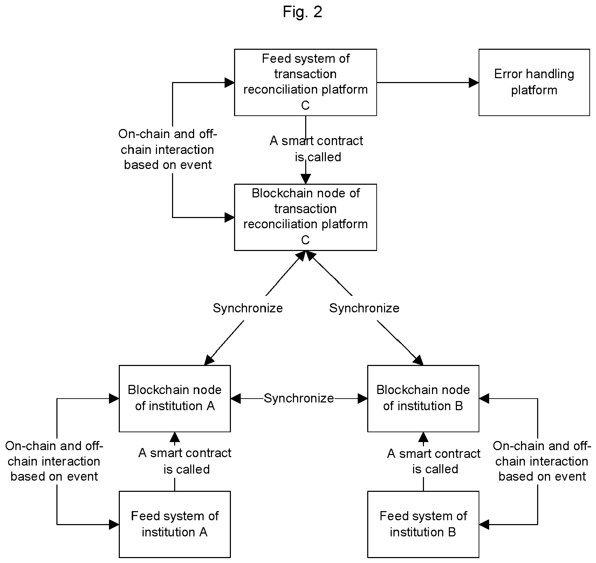

Fig. 2 is a block diagram of a reconciliation system according to an example of the present disclosure. As shown in Fig. 2, in the reconciliation system of the example of the present disclosure, each of blockchains of an institution A, an institution B and a transaction reconciliation platform C includes a blockchain node and a feed system. The blockchain node and the feed system may achieve on-chain and off-chain interaction based on events. The blockchain nodes of the institution A, the institution B and the transaction reconciliation platform C have a data synchronization function. A client deploys a smart contract for the blockchain node of the transaction reconciliation platform C. The smart contract is configured to automatically compare data in blockchain node. By means of the data synchronization function of the blockchain node, the smart contract is synchronized to the blockchain nodes of the institution A and the institution B. When inconsistent transaction records are found after reconciliation, the transaction reconciliation platform C sends the inconsistent transaction record to an automatic error handling system for error handling by means of the feed system. After error handling is completed, the transaction reconciliation platform C feeds and stores an error handling result to the blockchain node of the transaction reconciliation platform C by means of the feed system, and then synchronizes the error handling result to the blockchain nodes of the institution A and the institution B by means of the data synchronization function of the blockchains. The institution A, the institution B and the transaction reconciliation platform C modify a reconciliation state of transaction data in ledgers of the blockchain nodes by means of the smart contract.

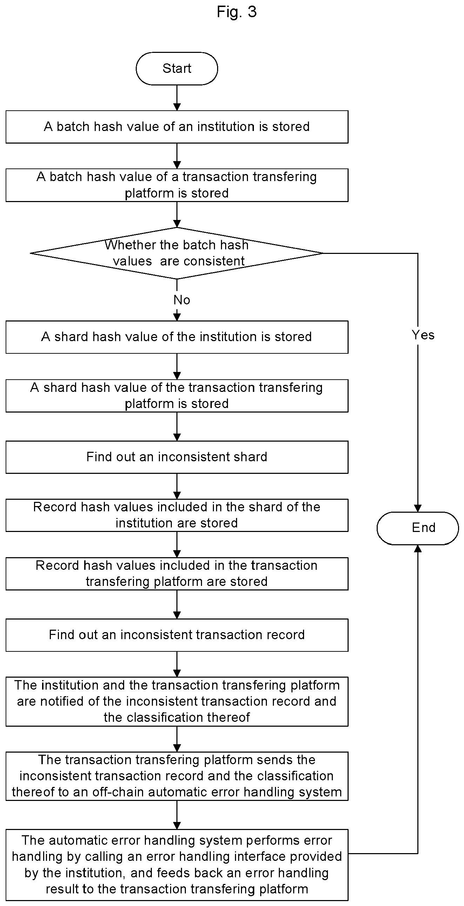

Fig. 3 is a schematic diagram of a reconciliation process according to an example of the present disclosure. As shown in Fig. 3, in the example of the present disclosure, a reconciliation flow mainly includes the following steps:
1. A feed system of an institution calculates first a batch hash value corresponding to a batch transaction record be reconciled (for example, a batch of transaction records within a last hour), and then calls a smart contract used for automatic comparison to feed and store the batch hash value calculated by the institution onto the blockchain, wherein the smart contract is equivalent to a program, and has attributes and methods, and the feed system of the institution saves the batch hash value to the attributes of the smart contract, such that the smart contract may use the batch hash value for operation;
2. A feed system of a transaction reconciliation platform also calculates a batch hash value corresponding to a batch transaction record to be reconciled (for example, a batch of transaction records within a last hour), and then calls a smart contract used for automatic comparison to feed and store the batch hash value calculated by the institution onto the blockchain;
3. The feed system of the transaction reconciliation platform triggers or regularly triggers execution of the smart contract used for automatic comparison, compares whether the batch hash value fed onto the blockchain by each institution is consistent with the batch hash value fed onto the blockchain by the transaction reconciliation platform, and in case that comparison shows consistence, completes reconciliation;
4. In case that the comparison shows inconsistence, the institution and the transaction reconciliation platform are notified to feed shard hash values corresponding to transaction record of the reconciliation batch;
5. Shard hash values by the feed systems of the transaction reconciliation platform and the institution end are feed onto the blockchain respectively;
6. The smart contract finds out, an inconsistent shard according to the shard hash values fed onto the blockchain by the transaction reconciliation platform and the institution end, and notify the institution and the transaction reconciliation platform to feed a record hash value corresponding to each transaction record included in the inconsistent shard;
7. The record hash values are feed by the feed systems of the transaction reconciliation platform and the feed systems of the institution end respectively;
8. The smart contract finds out an inconsistent record hash value according to the record hash values fed onto the blockchain by the transaction reconciliation platform and the record hash values fed onto the blockchain by the institution end, and classifies the inconsistent transaction record to determine the classification;
9. The institution and the transaction reconciliation platform are notified of the record hash values of the inconsistent transaction record, and the feed systems of the institution and the transaction reconciliation platform are notified of the classification of the inconsistent transaction record; and
10. The feed system of the transaction reconciliation platform sends the inconsistent classification and detailed data of the inconsistent transaction records to an automatic error handling system for error handling. The automatic error handling system calls an error handling interface API provided by or passed by the institution to handle errors, and feeds back an error handling result to the transaction reconciliation platform, such that the feed system of the transaction reconciliation platform may feed the error handling result onto the blockchain.

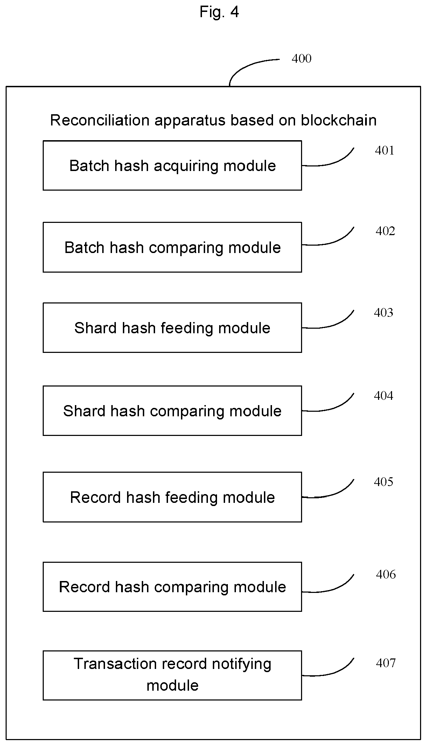

Fig. 4 is a schematic diagram of main modules of a reconciliation apparatus based on a blockchain according to an example of the present disclosure. As shown in Fig. 4, the reconciliation apparatus 400 based on a blockchain according to an example of the present disclosure mainly includes a batch hash acquiring module 401, a batch hash comparing module 402, a shard hash feeding module 403, a shard hash comparing module 404, a record hash feeding module 405, a record hash comparing module 406, and a transaction record notifying module 407.

The batch hash acquiring module 401 is configured to obtain a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, wherein the batch hash values are generated according to the reconciliation batch transaction records.

The batch hash comparing module 402 is configured to perform first comparison on the batch hash value fed onto the blockchain by the institution and the batch hash value fed onto the blockchain by the transaction reconciliation platform.

The shard hash feeding module 403 is configured to notify the institution and the transaction reconciliation platform to feed shard hash values corresponding to the reconciliation batch transaction record onto the blockchain under the condition that a result of the first comparison shows that the batch hash value fed onto the blockchain by the institution and the batch hash value fed onto the blockchain by the transaction reconciliation platform are inconsistence, wherein the shard hash values are obtained by sharding the reconciliation batch transaction record, and generating, for each shard, a shard hash value of the shard according to a transaction records included in the shard.

The shard hash comparing module 404 is configured to obtain an inconsistent shard by performing second comparison on the shard hash values fed onto the blockchain by the institution and the shard hash values fed onto the blockchain by the transaction reconciliation platform.

The record hash feeding module 405 is configured to notify the institution and the transaction reconciliation platform to feed a record hash value corresponding to each transaction record included in the inconsistent shard.

The record hash comparing module 406 is configured to obtain an inconsistent transaction record by performing third comparison on the record hash values fed onto the blockchain by the institution and the record hash values fed onto the blockchain by the transaction reconciliation platform.

The transaction record notifying module 407 is configured to notify the institution and the transaction reconciliation platform of the inconsistent transaction record.

According to an example of the present disclosure, the reconciliation apparatus 400 based on a blockchain further includes a transaction record sending module (not shown in the figure) configured to send the inconsistent transaction record to an automatic error handling system by the transaction reconciliation platform, such that the automatic error handling system performs error handling by calling an error handling interface provided by the institution, and feeds back an error handling result to the transaction reconciliation platform.

According to another example of the present disclosure, the reconciliation apparatus 400 based on a blockchain further includes a transaction classification processing module (not shown in the figure) configured to determine a classification to which the inconsistent transaction record belongs; notify the institution and the transaction reconciliation platform of the classification to which the inconsistent transaction record belongs; and send the classification to which the inconsistent transaction record belongs to the automatic error handling system by means of the transaction reconciliation platform.

According to yet another example of the present disclosure, the batch hash value is obtained by sequentially splicing the shard hash values corresponding to all shards included in the reconciliation batch transaction record. The shard hash value is obtained by sequentially splicing the record hash values obtained by performing hash operation on each transaction record included in the shard.

According to yet another example of the present disclosure, the transaction record has a transaction initiation time point, and the reconciliation batch transaction records are sorted and sharded based on the transaction initiation time point.

According to yet another example of the present disclosure, the shard hash values are fed onto a blockchain node in a form of a list. The shard hash comparing module 404 may further be configured to perform Cartesian product operation on a shard hash value list fed onto the blockchain by the institution and a shard hash value list fed onto the blockchain by the transaction reconciliation platform for comparison.

According to yet another example of the present disclosure, the reconciliation apparatus 400 based on a blockchain further includes a batch hash feeding module (not shown in the figure) configured to perform, before the step of acquiring a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, feed the batch hash values corresponding to the reconciliation batch transaction record onto the blockchain by means of the institution and the transaction reconciliation platform. Feeding the batch hash values and the shard hash values onto the blockchain includes: calling a smart contract of a blockchain node, and store the batch hash values and the shard hash values onto an attribute of the smart contract of the blockchain node.

According to still another example of the present disclosure, comparison of the batch hash values and comparison of the shard hash values are performed through a consensus algorithm.

According to a technical solution of the examples of the present disclosure, a batch hash value corresponding to a reconciliation batch transaction record fed onto the blockchain by an institution to be reconciled and a batch hash value corresponding to a reconciliation batch transaction record fed onto the blockchain by a transaction reconciliation platform are acquired respectively; first comparison is performed on the batch hash values; the institution and the transaction reconciliation platform are notified to feed shard hash values corresponding to the reconciliation batch transaction record onto the blockchain under the condition that the first comparison shows that the batch hash value fed onto the blockchain by an institution to be reconciled and the batch hash value fed onto the blockchain by a transaction reconciliation platform are inconsistence; an inconsistent shard is acquired by performing second comparison on the shard hash values; the institution and the transaction reconciliation platform feed a record hash value corresponding to each transaction record included in the inconsistent shard; an inconsistent transaction record is acquired by performing third comparison on the record hash values; and the institution and the transaction reconciliation platform are notified of the inconsistent transaction record. According to such a technical solution, a storage space of the blockchain can be saved, and an influence caused by insufficient blockchain performance can be greatly reduced and mitigated. A blockchain-based smart contract program can complete automatic comparison and automatic error handling, which greatly improves efficiency, and a reconciliation result cannot be tampered with. Moreover, since only hash data is stored on a chain, hash has a function of not being able to reverse original data, and an on-chain data privacy problem is solved through the feature of hash.

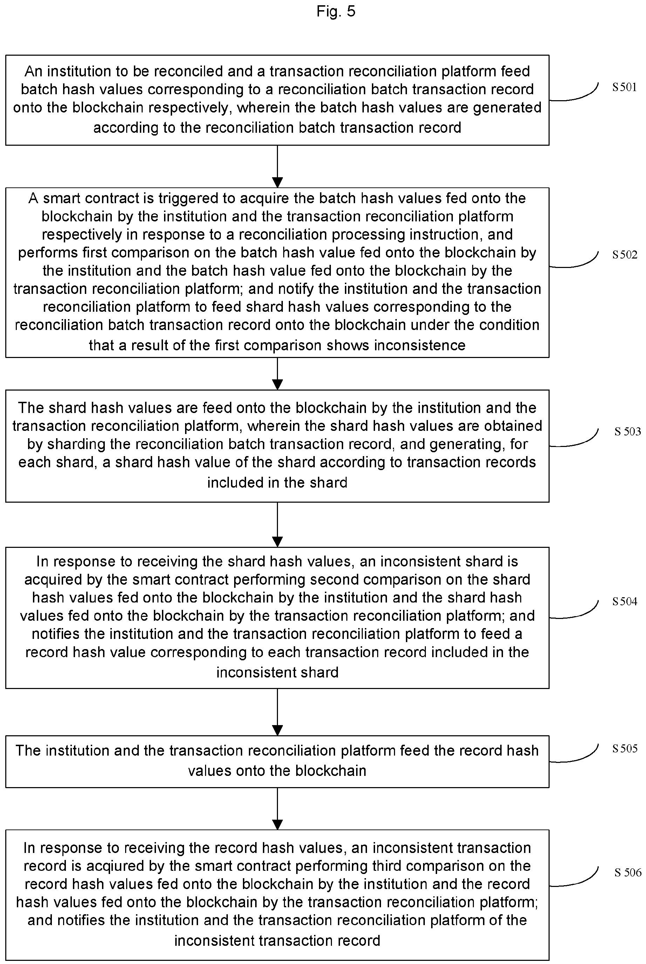

According to still another aspect of the present disclosure, a reconciliation method based on a blockchain is further provided. Fig. 5 is a schematic diagram of main steps of a reconciliation method based on a blockchain according to another example of the present disclosure. As shown in Fig. 5, in another example of the present disclosure, the reconciliation method based on a blockchain mainly includes S501-S506.
S501: an institution to be reconciled and a transaction reconciliation platform feed batch hash values corresponding to reconciliation batch transaction record onto the blockchain respectively, wherein the batch hash values are generated according to reconciliation batch transaction record;
S502: a smart contract is triggered to acquire the batch hash values fed onto the blockchain by the institution and the transaction reconciliation platform respectively in response to a reconciliation processing instruction, and perform first comparison on the batch hash value fed onto the blockchain by the institution and the batch hash value fed onto the blockchain by the transaction reconciliation platform; and notify the institution and the transaction reconciliation platform to feed shard hash values corresponding to the reconciliation batch transaction record onto the blockchain under the condition that the result of the first comparison shows that the batch hash value fed onto the blockchain by the institution and the batch hash value fed onto the blockchain by the transaction reconciliation platform are inconsistence;
S503: the shard hash values are fed onto the blcokchain by the institution and the transaction reconciliation platform, wherein the shard hash values are obtained by sharding the reconciliation batch transaction record, and generating, for each shard, a shard hash value of the shard according to transaction records included in the shard;
S504: in response to receiving the shard hash values, the smart contract performs second comparison on the shard hash values fed onto the blockchain by the institution and the shard hash values fed onto the blockchain by the transaction reconciliation platform, as to acquire an inconsistent shard; and notifies the institution and the transaction reconciliation platform to feed a record hash value corresponding to each transaction record included in the inconsistent shard onto the blockchain;
S505: the institution and the transaction reconciliation platform feed the record hash values onto the blockchain; and
S506: in response to receiving the record hash values, the smart contract performs third comparison on the record hash values fed onto the blockchain by the institution and the record hash values fed onto the blockchain by the transaction reconciliation platform, as to acquire an inconsistent transaction record; and notifies the institution and the transaction reconciliation platform of the inconsistent transaction record.

According to an example of the present disclosure, the reconciliation method based on a blockchain further includes:
the transaction reconciliation platform sends the inconsistent transaction record to an automatic error handling system, such that the automatic error handling system performs error handling by calling an error handling interface provided by the institution, and feeds back an error handling result to the transaction reconciliation platform; and
the transaction reconciliation platform feed the error handling result onto the blockchain.

According to an example of the present disclosure, after the institution and the transaction reconciliation platform feed onto the blockchain each time, data fed onto the blockchain by the institution is synchronized to a blockchain node of the transaction reconciliation platform based on a data synchronization function of a blockchain; and
the smart contract acquires the data fed onto the blockchain by the institution and the transaction reconciliation platform from the blockchain node of the transaction reconciliation platform.

According to still another aspect of the present disclosure, a reconciliation system based on a blockchain is further provided. The reconciliation system based on a blockchain includes an institution and a transaction reconciliation platform, wherein a smart contract is deployed on the transaction reconciliation platform;
the institution and the transaction reconciliation platform are configured to feed batch hash values corresponding to reconciliation batch transaction record onto the blockchain; feed, when receiving a notification from the smart contract to feed shard hash values corresponding to the reconciliation batch transaction record onto the blockchain, the shard hash values onto to the blockchain; and feed, when receiving a notification from the smart contract to feed a record hash values corresponding to each transaction record included in inconsistent shard onto to the blockchain, the record hash values onto to the blockchain, wherein the batch hash values are generated according to the reconciliation batch transaction record; and the shard hash values are obtained by sharding the reconciliation batch transaction record, and generating, for each shard, a shard hash value of the shard according to transaction records included in the shard; and
the smart contract is configured to acquire a batch hash value fed onto the blockchain by the institution and a batch hash value fed onto the blockchain by the transaction reconciliation platform respectively in response to a reconciliation processing instruction, and perform first comparison on the batch hash value fed onto the blockchain by the institution and the batch hash value fed onto the blockchain by the transaction reconciliation platform; notify the institution and the transaction reconciliation platform to feed shard hash values corresponding to the reconciliation batch transaction record onto to the blockchain under the condition that a result of the first comparison shows that the batch hash value fed onto the blockchain by the institution and the batch hash value fed onto the blockchain by the transaction reconciliation platform are inconsistence; acquire an inconsistent shard in response to receiving the shard hash values and by performing second comparison on the shard hash values fed onto the blockchain by the institution and the shard hash values fed onto the blockchain by the transaction reconciliation platform; notify the institution and the transaction reconciliation platform to feed a record hash value corresponding to each transaction record included in the inconsistent shard; acquire an inconsistent transaction record in response to receiving the record hash values and by performing third comparison on the record hash values fed onto the blockchain by the institution and the record hash values fed onto the blockchain by the transaction reconciliation platform; and notify the institution and the transaction reconciliation platform of the inconsistent transaction record.

According to an example of the present disclosure, the reconciliation system based on a blockchain further includes an automatic error handling system configured to perform error handling by calling an error handling interface provided by the institution, and feed back an error handling result to the transaction reconciliation platform.

The transaction reconciliation platform is further configured to send the inconsistent transaction record to the automatic error handling system, and receive the error handling result fed onto the blockchain back by the automatic error handling system; and feed the error handling result onto the blockchain.

In a traditional centralized accounting reconciliation and error handling mode, firstly, a central-bank-end system and a participating institution for reconciliation generate transaction records to be stored in a file system. The transaction records are encrypted with a symmetric key, and an encrypted file is uploaded to a secure file transmission protocol (SFTP) server. In such a process, although the file system uses a symmetric key for encryption, there is also the possibility of being cracked, resulting in data security and privacy problems. Secondly, the reconciliation participating institution acquires the transaction records from the SFTP server and compares them with internal transaction records of the participating institution. Accounting reconciliation in this process is performed locally at the participating institution end, which has disadvantages such as low reconciliation efficiency, no supervision of reconciliation process, no closed-loop feedback of reconciliation results, etc. Thirdly, in the traditional mode, in case that an error occurs in the reconciliation process, human intervention is usually required, and error handling is highly dependent on manual work, with a long processing time. Therefore, the traditional centralized accounting reconciliation and error handling mode has the problems such as insufficient data privacy, large data storage space, low reconciliation efficiency, a reconciliation result that can be tempered with and high dependence of error handling on manual work.

At present, an existing technical solution of using a blockchain for accounting verification in the industry is only limited to using a blockchain as a channel for data sharing and distribution, which is no different from the way reconciliation documents are issued to reconciliation participants in the traditional centralized accounting verification and error handling mode, and technical advantages of a blockchain is not fully reflected. Moreover, in the existing technical solution of blockchain reconciliation, a performance influence brought by increase in nodes participating in reconciliation and continuous increase in reconciliation data, and financial data security risks caused by distributed ledgers also need to be considered.

In order to solve the above technical problems, the present disclosure provides a reconciliation method based on a blockchain according to the following considerations.

In a first aspect, a multi-party consensus reconciliation model is established based on the theoretical basis of participation subject peer-to-peer, data credibility and smart contract loading support of a blockchain technology. The central-bank end and the institutions participating in reconciliation jointly perform reconciliation, that is, a centralized node and a participating node jointly feed reconciliation data onto the blockchain. The blockchain smart contract is deployed in advance, and automation and standardization of a reconciliation process is achieved. A reconciliation result is generated in real time on the chain and cannot be tampered with, such that credibility of the reconciliation result is improved.

In a second aspect, according to a theoretical basis of irreversibility and uniqueness of the hash algorithm, the protection of data privacy is strengthened. By using the irreversibility and uniqueness of the hash algorithm, the hash value is used to replace transaction information plaintext for automatic on-chain reconciliation, such that reconciliation data of different participating institutions is isolated, and an influence of reconciliation data symmetric encryption on blockchain performance and efficiency is eliminated. It is embodied in the following two aspects: the first aspect is that a unique hash value may be generated based on original transaction information, and the hash value is not able to be restored to original transaction information plaintext. Using the hash value to replace the transaction information plaintext can achieve a privacy protection effect of the transaction information. The second aspect is that the same original transaction information must generate the same hash value, which can guarantee consistency between the hash value and the original transaction information. The hash value is fed onto the blockchain and is automatically reconciled by the smart contract according to a preset strategy, such that the reconciliation efficiency is improved.

In a third aspect, based on "binary search" rapid positioning and the theoretical basis of equal length characteristics of hash values, the reconciliation efficiency and scalability of the blockchain are improved. Firstly, based on the idea of "binary search", a flexibly configurable data sharding algorithm is used to shard the original transaction information, which can quickly locate the error transaction information and improve a search speed. Secondly, the hash value is generated based on the original transaction information of each shard. A fixed length (which may be flexibly set, for example, 32 bytes) of the hash value is much less than a length of the original transaction information. The hash value replaces the original transaction information to be fed onto the blockchain, which can greatly reduce a storage space of the blockchain. Finally, the sharding algorithm is supported to perform adaptive adjustment, such that the situation that data capacity oscillation of a single shard caused by too large or too small volume of business influences the reconciliation efficiency can be avoided.

In a fourth aspect, based on characteristics that digital currency is liability of the central bank and payment of the digital currency is settlement, an automatic error handling mode is proposed. The digital currency is taken as the direct liability of the central bank to the public, an operating institution on behalf of the central bank records the holding case of the digital currency by the public under a two-layer operation system. Based on the characteristic of "payment is settlement" of the digital currency, inter-institution transactions have no "in-transit" transaction of a traditional payment system. Therefore, essence of error handling in the digital currency system is to guarantee that the operating institution correctly accounts on the digital currency wallets of the public. Therefore, heterogeneity of an internal system of each operating institution can be discarded, and a transaction result of the operating institution being consistent with the transaction result of the interconnection platform should be taken as a basic principle. By formulating a standardized and automatic error handling process, automatic error handling can be implemented. An error handling time can be greatly shortened, fund security of a user can be improved, and labor cost of error handling and a capital risk caused by delayed error handling can be effectively reduced.

The present disclosure organically combines the universality, determinacy, irreversibility and anti-collision characteristics of the hash algorithm, a blockchain consensus mechanism, a binary search algorithm and a smart contract, and provides standard, unified and automatic reconciliation and error handling services for participating institutions accessing the digital currency interconnection platform based on a traditional mode of "summary reconciliation-detailed reconciliation". The central bank and the participating institutions act as trusted nodes to access a digital currency blockchain ledger and feed respective digital currency transaction records onto the blockchain through application programming interfaces. An automatic reconciliation smart contract is preset on the chain. The central bank and the operating institution feed data onto the blockchain and then trigger automatic execution of the smart contract, to complete data comparison. In case that the data comparison succeeds, the smart contract marks the transaction as a succeed reconciliation. In case that the data comparison fails, the smart contract marks the transaction as a failed reconciliation. For the transaction with a reconciliation failure, the preset automatic error smart contract is used to mark a failure type of the error transaction according to a specific transaction scene and a failure reason, an automatic error handling application program programming interface developed in advance by the participating organization is called, automatic error handling is completed according to a preset error handling standard flow.

Specific implementation processes of the present disclosure are described below in conjunction with specific examples.

Fig. 6 is a schematic diagram of main steps of a reconciliation method based on a blockchain according to yet another example of the present disclosure. As shown in Fig. 6, the reconciliation method based on a blockchain according to an example of the present disclosure mainly includes S601-S603.
S601: in response to receiving shard hash values of data to be reconciled fed onto the blockchain by reconciliation participants, a smart contract is triggered to execute comparison of the shard hash values, wherein the smart contract is deployed on the blockchain in advance, and the shard hash values are obtained by performing hash operation on each shard after sharding the data to be reconciled;
S602: the reconciliation participants are notified to feed a record hash value of each transaction record included in an inconsistent shard under the condition that comparison of the shard hash values shows inconsistence; and
S603: in response to receiving the record hash value fed onto the blockchain by the reconciliation participants, the smart contract is triggered to execute comparison of record hash values, so as to find an inconsistent transaction record, and generate a reconciliation result.

According to S601-S603, the automatic reconciliation smart contract is preset on the blockchain, each reconciliation participant triggers automatic execution of the smart contract after feeding data onto the blockchain, and data comparison is completed, such that automatic reconciliation based on a blockchain is implemented, and automation and standardization of a reconciliation process is achieved. A reconciliation result is generated in real time on the blockchain and cannot be tampered with, such that credibility of the reconciliation result is improved. According to a theoretical basis of irreversibility and uniqueness of the hash algorithm, reconciliation is carried out by comparing the hash values of data to be reconciled, and the protection of data privacy is strengthened. Comparison of reconciliation data based on data shards is helpful to quickly locate error transactions and improve a reconciliation speed.

According to an example of the present disclosure, a reconciliation result is generated directly under the condition that the comparison of the shard hash values shows consistence. When the comparison of the shard hash values shows consistence, it may be considered that data to be reconciled of all reconciliation participant is consistent, the reconciliation passes, and the reconciliation result may be generated directly.

According to an example of the present disclosure, the reconciliation participants include reconciliation institutions and a transaction reconciliation platform. The reconciliation institution is, for example, a commercial bank participating in reconciliation. The transaction reconciliation platform is, for example, a central bank end participating in reconciliation. Data of the transaction reconciliation platform has absolute credibility. The transaction reconciliation platform is further configured to perform transaction transfer between reconciliation institutions and record transaction records. According to the example of the present disclosure, the reconciliation method further includes: sending the inconsistent transaction records to an automatic error handling system, such that the automatic error handling system performs error handling by calling the reconciliation institution and acquires an error handling result fed back by the reconciliation institution. After reconciliation is performed according to the shard hash value and/or record hash value of the data to be reconciled fed onto the blockchain by each reconciliation participant, in case that inconsistent transaction records exist, the inconsistent transaction records need to be sent to the automatic error handling system and may be subjected to error handling. When the automatic error handling system calls the reconciliation institution for error handling, for example, the automatic error handling system may call the reconciliation institution by calling an automatic error handling application programming interface provided by the reconciliation institution. After the reconciliation institution completes error handling, an error handling result is returned to the automatic error handling system, and the automatic error handling system updates an error handling status to "handling completion" after receiving a return receipt. For a transaction record that does not feed back an error handling result after timeout, the automatic error handling system performs alarm processing.

According to an example of the present disclosure, an error classification may further be marked on the inconsistent transaction record according to a preset business rule before the inconsistent transaction record is sent to the automatic error handling system. Moreover, the error classification of the inconsistent transaction record is sent to the automatic error handling system when the inconsistent transaction record is sent to the automatic error handling system. For the inconsistent transaction record, the inconsistent transaction record may be classified according to a specific transaction scene and a reconciliation failure reason, and the error classification may be marked. For each error classification, a corresponding error handling flow may be preset in the reconciliation institution to perform errors handling. The reconciliation institution performs error handling according to an error handling flow corresponding to the error classification of the inconsistent transaction record.

According to another example of the present disclosure, the preset business rule is implemented as an automatic error smart contract. An error classification is marked on the inconsistent transaction record according to a preset business rule includes: the automatic error smart contract is called, and the error classification is marked on the inconsistent transaction record in combination with a specific transaction scene and a failure reason. In this way, the error classification can be performed based on the preset automatic error smart contract, such that human resources are saved, and classification efficiency is improved.

In order to improve the blockchain reconciliation performance and reconciliation fault tolerance capability, the present disclosure uses a flexibly configurable data sharding algorithm to shard data to be reconciled based on an idea of "binary search". The essence of reconciliation is to search massive data for inconsistent error transaction records, such that improving a search speed is a key to improvement in reconciliation performance and efficiency. Hash values generated by same data must be the same. According to the principle, constructing as much data as possible into one shard can greatly improve the reconciliation efficiency. In view of this, the present disclosure designs a reconciliation data sharding algorithm, that is, specific data sharding algorithm parameters are flexibly adjusted according to a plurality of factors such as business operation conditions, reconciliation error rates, the number of participating institutions, and a digital currency system unitization technical architecture, and the data to be reconciled is divided into several parts.

According to the example of the present disclosure, the transaction record has time information point, and the data to be reconciled is sharded based on the time information point. In data to be reconciled of one transaction batch, the data to be reconciled of the reconciliation institution and the transaction reconciliation platform are sorted according to time information such as "business processing time" or "transaction completion time" of each transaction, and then is sharded according to an equal time interval, such that a plurality of shards corresponding to the data to be reconciled are obtained.

According to an example of the present disclosure, the transaction records have ordered message identification numbers. The shard hash value is obtained by following operations: sharding the data to be reconciled, sorting the transaction records of each shard incrementally according to the message identification numbers, and performing hash operation. For each shard, before the hash operation, the transaction records included in the shard are sorted to guarantee that transaction record sequences of all reconciliation institutions are completely consistent, then the hash operation is performed on the sorted transaction records, and the shard hash value is obtained. For example, in one transaction batch (for example, transaction records within 1 hour), data to be reconciled of the reconciliation institution is sorted in sequence according to the "business processing time" or "transaction completion time" of each transaction, and divided into 6 parts (that is, divided at an interval of 10 minutes), each part includes transaction records occurring within 10 minutes. For each part including transaction records (that is, each shard), the transaction records are sorted by the message identification number, and hash values are generated according to a hash algorithm. Finally, 6 shard hash values are obtained.

According to yet another example of the present disclosure, when an amount of the data to be reconciled is greater than a first threshold, a sharding time interval is decreased to increase the number of shards. When the amount of the data to be reconciled is less than a second threshold, the sharding time interval is increased to decrease the number of shards. The first threshold is greater than the second threshold. In the example of the present disclosure, through the adaptively-adjusted sharding algorithm, when the volume of business is too large or too small, the situation that excessive oscillation of a data capacity of a single shard influences reconciliation efficiency can be avoided. For example, when the volume of business is too large, in order to avoid a low reconciliation fault tolerance rate caused by too much data of one shard, a sharding time interval is shortened, and the number of shards is increased, such that the data of each shard is consistent with that in normal times. When the volume of business is small, in order to avoid a low reconciliation efficiency caused by too little shard data, the sharding time interval is prolonged, and the number of shards is reduced, such that the data capacity of each shard is stable. Therefore, the influence of an unbalanced data size on reconciliation efficiency can be avoided. Furthermore, the fault tolerance rate of a reconciliation mode can be improved. For example, when the volume of business is large, in case that the data size of each shard is too large, then when an error occurs in a transaction, all the data of the entire shard will be reconciled in detail. Through the adaptively-adjusted algorithm of this example, the shard is adjusted into a plurality of shards (for example, N shards), when an error occurs in one transaction, only data of a shard to which the transaction record with the error belongs needs to be reconciled in detail, a reconciliation data size is 1/N of that before adaptive adjustment, such that the reconciliation efficiency is greatly improved. Reconciliation errors that may be caused by excessive data are avoided, so as to improve the reconciliation error tolerance rate.

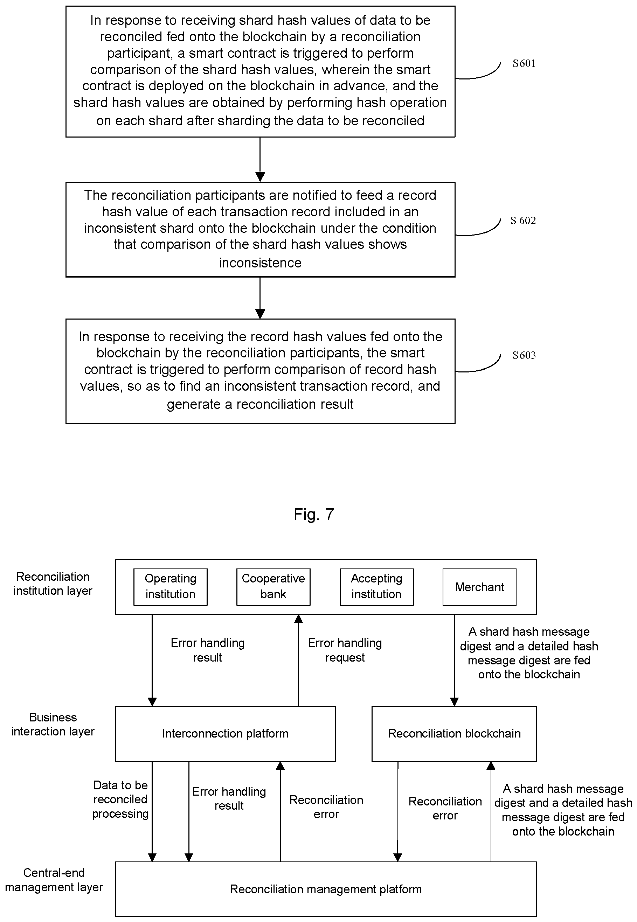

Fig. 7 is a schematic diagram of automatic reconciliation data layer interaction according to yet another example of the present disclosure. As shown in Fig. 7, reconciliation institutions participating in reconciliation include, for example, digital currency operating institutions, cooperative banks, accepting institutions or merchants. Business interaction layers include, for example, interconnection platforms, reconciliation blockchains, etc. Central-end management layers include, for example, reconciliation management platforms of a central end (central bank). A reconciliation blockchain is configured to acquire shard hash values and record hash values of data to be reconciled fed onto the blockchain by the reconciliation institution and the reconciliation management platform of a central end, perform reconciliation, and send transaction records with reconciliation errors to the reconciliation management platform of a central end. The reconciliation management platform of a central end sends the transaction records with reconciliation errors to the reconciliation institution by means of the interconnection platform, such that after receiving an error handling request sent from the interconnection platform, the reconciliation institution performs error handling on the inconsistent transaction records included in the error handling request, and returns an error handling result to the reconciliation management platform of a central end by means of the interconnection platform, so as to update a state of the transaction records with reconciliation errors. In the example of the present disclosure, the reconciliation management platform of a central end includes an automatic error handling system configured to execute error handling, and a transaction record summarizing platform configured to summarize the full amount of data to be reconciled of the reconciliation institution by means of the interconnection platform.

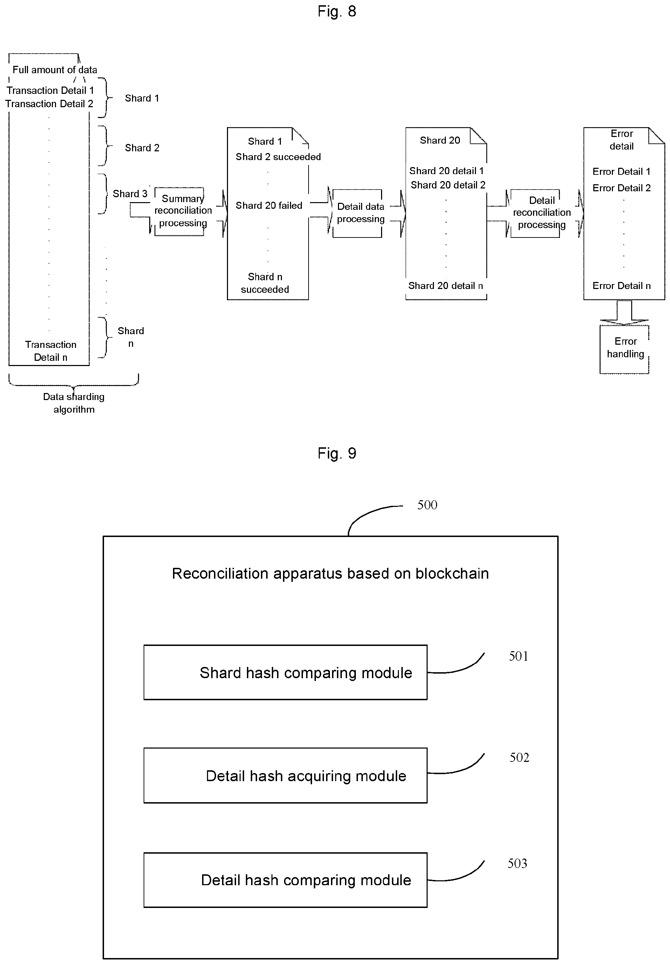

Fig. 8 is a schematic diagram of an automatic reconciliation process based on shards according to yet another example of the present disclosure. As shown in Fig. 8, an automatic reconciliation process based on shards according to the example of the present disclosure mainly includes the following steps:
1. data to be reconciled processing: a blockchain reconciliation service of a reconciliation management platform of a central end acquires regularly the full amount of data to be reconciled of all reconciliation institutions by means of an interconnection platform;
2. data sharding processing: based on the idea of "binary search", data sharding is performed on the data to be reconciled of a transaction batch of the central end and the reconciliation institution; where specifically, sharding is performed according to time information of transaction records, and transaction records of each shard are sorted according to message identifiers; and in an example of the present disclosure, for example, data to be reconciled of one transaction batch is divided into 6 shards;
3. shard hash value feeding onto the blockchain: after generating shard data according to a same sharding rule, the central end and the reconciliation institution end performs hash processing on each shard data, and generates the shard hash value and feeds the generated shard hash value onto the blockchain; wherein in the foregoing example, the central end and the reconciliation institution end both feed the 6 shard hash values onto the blockchain;
4. summary reconciliation processing: an automatic reconciliation smart contract is deployed in advance on a reconciliation blockchain, the smart contract is triggered, and automatically verified each shard hash value at the central end and each shard hash value at the reconciliation institution end, wherein in case that verification shows consistence, the transaction record of the shard is successfully reconciled; and in case that the verification shows inconsistence, the shard automatically enters a detailed reconciliation stage;
5. record hash value feeding onto the blockchain: for a shard which has failure of shard reconciliation, the central end and the reconciliation institution end calculates a record hash value of each transaction record in the shard and uploads the record hash value to the reconciliation blockchain;
6. detailed reconciliation processing: the automatic reconciliation smart contract deployed in advance on the reconciliation blockchain is triggered, and each record hash value at the central end and each record hash value at the reconciliation institution end are automatically verified, wherein in case that the verification shows consistence, detailed reconciliation is succeed; and in case that the verification shows inconsistence, an error handling flow automatically proceeds; and
7. automatic error handling: after each reconciliation institution completes reconciliation, a batch reconciliation result of the institution is generated, transaction records with failed detailed reconciliation are classified according to relevant business rules uniformly formulated by the central end, and error detailed data of failed reconciliation between the batch of participating institutions and the interconnection platform is generated. An automatic error handling system for reconciliation receives reconciliation error data, filters error data to be processed, and notifies a relevant reconciliation institution of the error data by calling a reconciliation error automatic handling interface provided by the reconciliation institution. The reconciliation institution handles errors according to an error handling standard flow uniformly provided by the central end, and returns a return receipt to the automatic error handling system for reconciliation after processing. The automatic error handling system for reconciliation updates an error handling state to "handling completion" after receiving the return receipt. For a transaction that does not feed back a handling result after timeout, the automatic error handling system for reconciliation performs alarm processing.

Fig. 9 is a schematic diagram of main modules of a reconciliation apparatus based on a blockchain according to yet another example of the present disclosure. As shown in Fig. 9, the reconciliation apparatus 900 based on a blockchain according to the example of the present disclosure mainly includes a shard hash comparing module 901, a detail hash acquiring module 902, and a detail hash comparing module 903.

The shard hash comparing module 901 is configured to trigger, in response to receiving shard hash values of data to be reconciled fed onto the blockchain by reconciliation participants, a smart contract to perform comparison on the shard hash values, wherein the smart contract is deployed on the blockchain in advance, and the shard hash values are obtained by performing hash operation on each shard after sharding the data to be reconciled.

The detail hash acquiring module 902 is configured to notify the reconciliation participant to feed a record hash value of each transaction record included in an inconsistent shard onto the blockchain under the condition that comparison of the shard hash values shows inconsistence.

The detail hash comparing module 903 is configured to trigger, in response to receiving the record hash values fed onto the blockchain by the reconciliation participants, the smart contract to perform comparison of record hash values, so as to find an inconsistent transaction record, and generate a reconciliation result.

According to an example of the present disclosure, the reconciliation apparatus 900 based on a blockchain may further include a reconciliation result generating module (not shown in the figure) configured to generate the reconciliation result directly under the condition that the comparison of the shard hash values shows consistence.

According to another example of the present disclosure, the reconciliation participants include reconciliation institutions and a transaction reconciliation platform. The reconciliation apparatus 900 based on a blockchain may further include an error handling module (not shown in the figure) configured to send the inconsistent transaction record to an automatic error handling system, such that the automatic error handling system performs error handling by calling the reconciliation institution and obtains an error handling result fed back by the reconciliation institution.

According to yet another example of the present disclosure, the reconciliation apparatus 900 based on a blockchain may further include an error classification module (not shown in the figure) configured to mark an error classification on the inconsistent transaction record according to a preset business rule before the inconsistent transaction record is sent to the automatic error handling system.

The reconciliation apparatus 900 based on a blockchain may further include an error classification sending module (not shown in the figure) configured to send the error classification of the inconsistent transaction record to the automatic error handling system when the inconsistent transaction record is sent to the automatic error handling system.

According to yet another example of the present disclosure, the preset business rule is implemented as an automatic error smart contract. The error classification module (not shown in the figure) may further be configured to call the automatic error smart contract, and mark the error classification on the inconsistent transaction record in combination with a specific transaction scene and a failure reason.

According to yet another example of the present disclosure, the reconciliation institution performs error handling according to an error handling flow corresponding to the error classification of the inconsistent transaction record.

According to yet another example of the present disclosure, the transaction record has time information, and the data to be reconciled is sharded based on the time information.

According to yet another example of the present disclosure, the transaction records have ordered message identification numbers. The shard hash value is obtained by sharding the data to be reconciled, sorting the transaction records of each shard incrementally according to the message identification numbers, and performing hash operation.

According to still another example of the present disclosure, when an amount of the data to be reconciled is greater than a first threshold, a sharding time interval is decreased to increase the number of shards. When the amount of the data to be reconciled is less than a second threshold, the sharding time interval is increased to decrease the number of shards. The first threshold is greater than the second threshold.

According to a technical solution of the examples of the present disclosure, in response to receiving shard hash values of data to be reconciled fed onto the blockchain by reconciliation participants, a smart contract is triggered to perform comparison of the shard hash values, wherein the smart contract is deployed on the blockchain in advance, and the shard hash value is obtained by performing hash operation on each shard after sharding the data to be reconciled; the reconciliation participants are notified to feed a record hash value of each transaction record included in an inconsistent shard under the condition that comparison of the shard hash values shows inconsistence; and in response to receiving the record hash values fed onto the blockchain by the reconciliation participants, the smart contract is triggered to perform comparison of record hash values, so as to find an inconsistent transaction record, and a reconciliation result is generated. In this way, the automatic reconciliation smart contract is preset on the blockchain, each reconciliation participant triggers automatic execution of the smart contract after feeding data onto the blockchain, and data comparison is completed, such that automatic reconciliation based on a blockchain is implemented, and automation and standardization of a reconciliation process is achieved. A reconciliation result is generated in real time on the blockchain and cannot be tampered with, such that credibility of the reconciliation result is improved. According to a theoretical basis of irreversibility and uniqueness of the hash algorithm, reconciliation is performed by comparing the hash values of data to be reconciled, and the protection of data privacy is strengthened. Comparison of reconciliation data based on data shards is helpful to quickly locate error transactions and improve a reconciliation speed.

The technical solution of the present disclosure has the beneficial effects as follows.

The first aspect is to use a hash algorithm to guarantee security of distributed ledger data. According to the present disclosure, hash values are used to replace traditional transaction detail plaintext, and characteristics that original information cannot be reversely deduced through the hash algorithm is used, such that data isolation between different institutions participating in reconciliation is achieved, and financial data security is guaranteed.

The second aspect is to use the hash algorithm and a data sharding algorithm to improve data storage performance and reconciliation efficiency. One hash value has, for example, only 32 bytes, and information of one original transaction record is greater than the 32 bytes, for example, 104 bytes. With a reconciliation error rate of 10% as an example, the present disclosure can save a blockchain storage space by about 96.92% through calculation. Combined with the data sharding algorithm, a reconciliation method of summarizing reconciliation first and then detailed reconciliation can effectively reduce complexity of the algorithm and greatly improve the reconciliation efficiency.

The third aspect is that a smart contract technology based on a blockchain guarantees that a reconciliation result cannot be tampered with. The smart contract automatically verifies transactions at each blockchain node and make consensus between the blockchain nodes. A consensus algorithm guarantees that reconciliation results are stored in a distributed manner, thus guaranteeing that reconciliation data cannot be tampered with.

Through innovations in the above three aspects, the present disclosure is expected to have desirable application prospects. In terms of application fields, the present disclosure may be applied to a scene in which financial market infrastructure provides reconciliation services for participants and financial institutions provide transaction confirmation services for peer institutions or large customers. In terms of application degree, the present disclosure may completely replace a traditional centralized reconciliation mode. In terms of application expected benefits, the present disclosure can reduce consumption of hardware storage devices and network resources by a traditional reconciliation mode, and can further reduce labor cost of enterprises for business operations such as reconciliation. As for an application effect, the present disclosure can improve reconciliation efficiency and a reconciliation automation level of infrastructure, and further improve an external service level and market competitiveness of infrastructure. As for regulatory governance, it is beneficial for financial regulatory authorities to better perform penetrating supervision by improving the real-time and accuracy of reconciliation.

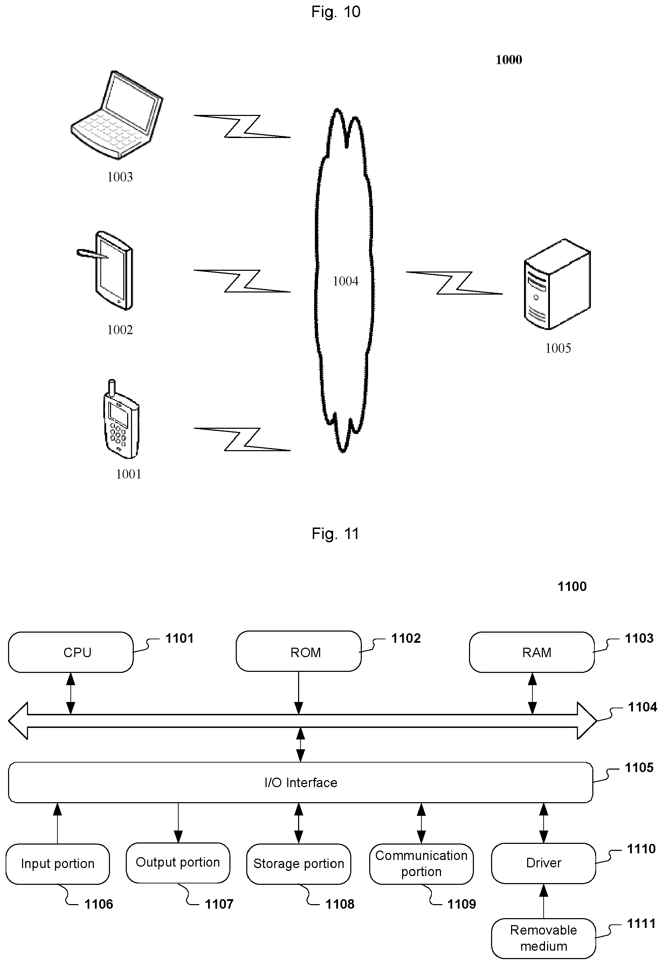

Fig. 10 shows an illustrative system architecture 1000 to which a reconciliation method based on a blockchain or a reconciliation apparatus based on a blockchain according to examples of the present disclosure may be applied.

As shown in Fig. 10, the system architecture 1000 may include terminal devices 1001, 1002, and 1003, a network 1004, and a server 1005. The network 1004 is configured to provide a medium for communication links between the terminal devices 1001, 1002, 1003 and the server 1005. The network 1004 may include various connection types, such as wired communication links, wireless communication links, fiber optic cables, etc.

A user may use the terminal devices 1001, 1002, 1003 to interact with the server 1005 by means of the network 1004, so as to receive or send messages, etc. Various communication client applications, such as banking applications, blockchain processing applications, transaction record applications, social platform software, etc (as examples only), may be installed on the terminal devices 1001, 1002, and 1003.

The terminal devices 1001, 1002, and 1003 may be various electronic devices having display screens and supporting web browsing, including but not limited to smart phones, tablet computers, laptop portable computers, desktop computers, etc.

The server 1005 may be a server providing various services, such as a background management server (as an example only) that supports reconciliation requests sent from a user by using the terminal devices 1001, 1002, 1003. As for received data such as reconciliation requests, the background management server may acquire a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, compare the batch hash values, acquire shard hash values, compare the shard hash values to obtain an inconsistent transaction record, notify the institution and the transaction reconciliation platform of the transaction record for processing, and feed back a processing result (for example, the inconsistent transaction record) to the terminal device.

It should be noted that the reconciliation method based on a blockchain provided in the examples of the present disclosure is generally executed by the server 1005. Correspondingly, the reconciliation apparatus based on a blockchain is generally set in the server 1005.

It should be understood that the number of terminal devices, networks and servers in Fig. 10 is merely illustrative. There may be any number of terminal devices, networks and servers depending on implementation needs.

With reference to Fig. 11 below, a schematic structural diagram of a computer system 1100 of a terminal device or a server suitable for implementing an example of the present disclosure is shown. The terminal device or the server illustrated in Fig. 11 is merely an instance and should not impose any limitation on the functions and scope of use of the examples of the present disclosure.

As shown in Fig. 11, the computer system 1100 includes a central processing unit (CPU) 1101 that may execute various appropriate actions and processes in accordance with a program stored in a read only memory (ROM) 1102 or a program loaded from a storage portion 1108 into a random access memory (RAM) 1103. The RAM 1103 also stores various programs and data needed for the operations of the system 1100. The CPU 1101, the ROM 1102 and the RAM 1103 are connected to each other by a bus 1104. An input/output (I/O) interface 1105 is also connected to the bus 1104.

The following components are connected to the I/O interface 1105: an input portion 1106 including a keyboard, a mouse, etc.; an output portion 1107 including a cathode ray tube (CRT), a liquid crystal display (LCD), a speaker, etc.; a storage portion 1108 including a hard disk, etc.; and a communication portion 1109 including a network interface card such as a local area network (LAN) card, a modem, etc. The communication portion 1109 executes communication processing by means of a network such as the Internet. A driver 1110 is also connected to the I/O interface 1105 as needed. A removable medium 1111, such as a magnetic disk, an optical disk, a magneto-optical disk, a semiconductor memory, etc, is mounted on the drive 1110 as necessary, such that a computer program read therefrom is installed into the storage portion 1108 as necessary.

In particular, according to examples disclosed in the present disclosure, a processes described above with reference to the flowcharts may be implemented as a computer software program. For example, examples disclosed in the present disclosure include a computer program product. The computer program product includes a computer program carried on a computer-readable medium, and the computer program includes a program code for executing the method illustrated in the flowchart. In such examples, the computer program may be downloaded and installed from a network by means of the communication portion 1109, and/or installed from the removable medium 1111. When executed by the central processing unit (CPU) 1101, the computer program executes the above functions defined in the system of the present disclosure.

It should be noted that the computer-readable medium shown in the present disclosure may be a computer-readable signal medium or a computer-readable storage medium, or any combination of a computer-readable signal medium and a computer-readable storage medium. The computer-readable storage medium may include, but is not limited to, an electronic, magnetic, optical, electromagnetic, infrared, or semiconductor system, apparatus, or device, or any combination of the foregoing. More specific instance of the computer-readable storage medium may include, but is not limited to, an electrical connection based on one or more wires, a portable computer diskette, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium that includes or stores a program for use by or in conjunction with an instruction execution system, apparatus, or device. In the present disclosure, the compute-readable signal medium may include a data signal propagating in a baseband or as part of a carry wave and carrying a computer-readable program code. Such a propagated data signal may have a variety of forms and may include, but is not limited to, an electromagnetic signal, an optical signal, or any suitable combination of the foregoing. The computer-readable signal medium may also be any computer-readable medium besides a computer-readable storage medium. The computer-readable medium can send, propagate, or transmit a program for use by or in conjunction with an instruction execution system, apparatus, or device. A program code included on a computer-readable medium may be transmitted by means of any suitable medium, including, but not limited to, wirelessness, wires, fiber optic cables, radio frequency (RF), etc., or any suitable combination of the foregoing.

The flowcharts and block diagrams in the accompanying drawings illustrate the architecture, functionality, and operations possibly implemented by the systems, methods, and computer program products according to various examples of the present disclosure. In this regard, each block in the flowcharts or block diagrams may represent a module, a program segment, or part of a code, and a module, a program segment, or part of a code includes one or more executable instructions for implementing a specified logical function. It should also be noted that in some alternative implementations, a function noted in a block may occur in a different order than an order noted in the figures. For example, two consecutive blocks may actually be executed substantially in parallel, or in a reverse order sometimes, depending on a function involved. It should also be noted that each block in the block diagrams or flowcharts, and combinations of blocks in the block diagrams or flowcharts, can be implemented by special purpose hardware-based systems that perform specified functions or operations, or can be implemented by combinations of special purpose hardware and computer instructions.

The units or modules described in the example of the present disclosure may be implemented in software or hardware. The described unit or module may also be set in a processor. For example, it may be described as: a processor includes a batch hash acquiring module, a batch hash comparing module, a shard hash feeding module, a shard hash comparing module, a record hash feeding module, a record hash comparing module, and a transaction record notifying module. The names of these units or modules do not constitute a limitation of the unit or module itself in certain cases. For example, the batch hash acquiring module may further be described as "a module configured to acquire a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively".

As another aspect, the present disclosure further provides a computer-readable medium. The computer-readable medium may be included in the above device described in the above example and may also exist independently without being assembled into the device. The computer-readable medium carries one or more programs. When the one or more programs are executed by one device, the device may acquire a batch hash value corresponding to a reconciliation batch transaction record fed onto the blockchain by an institution to be reconciled and a batch hash value corresponding to a reconciliation batch transaction record fed onto the blockchain by a transaction reconciliation platform respectively, wherein the batch hash values are generated according to the reconciliation batch transaction records; perform first comparison on the batch hash values fed onto the blockchain by the institution and the batch hash values fed onto the blockchain by the transaction reconciliation platform; notify the institution and the transaction reconciliation platform to feed shard hash values corresponding to the reconciliation batch transaction record onto the blockchain under the condition that the first comparison shows inconsistence, wherein the shard hash values are obtained by sharding the reconciliation batch transaction record, and generating, for each shard, a shard hash value of the shard according to transaction records included in the shard; acquire an inconsistent shard by performing second comparison on the shard hash values fed onto the blockchain by the institution and the shard hash values fed onto the blockchain by the transaction reconciliation platform; notify the institution and the transaction reconciliation platform to feed a record hash value corresponding to each transaction record included in the inconsistent shards; acquire an inconsistent transaction record by performing third comparison on the record hash values fed onto the blockchain by the institution and the record hash values fed onto the blockchain by the transaction reconciliation platform; and notify the institution and the transaction reconciliation platform of the inconsistent transaction record.

According to a technical solution of the examples of the present disclosure, a batch hash value corresponding to a reconciliation batch transaction record fed onto the blockchain by an institution to be reconciled and a batch hash value corresponding to a reconciliation batch transaction record fed onto the blockchain by a transaction reconciliation platform are acquired respectively; first comparison is performed on the batch hash values; the institution and the transaction reconciliation platform are notified to feed shard hash values corresponding to the reconciliation batch transaction record onto the blockchain under the condition that the first comparison shows inconsistence; an inconsistent shard is acquired by performing second comparison on the shard hash values; the institution and the transaction reconciliation platform feed record hash values corresponding to each transaction record included in the inconsistent shards onto the blockchain; an inconsistent transaction record is acquired by performing third comparison on the record hash values; and the institution and the transaction reconciliation platform are notified of the inconsistent transaction record. According to such a technical solution, a storage space of the blockchain can be saved, and an influence caused by insufficient blockchain performance can be greatly reduced and mitigated. A blockchain-based smart contract program can complete automatic comparison and automatic error handling, which greatly improves efficiency, and a reconciliation result cannot be tampered with. Moreover, since only hash data is stored on a chain, hash has a function of not being able to reverse original data, and an on-chain data privacy problem is solved through the feature of hash.

The above specific embodiments do not limit the scope of protection of the present disclosure. Those skilled in the art will appreciate that various modifications, combinations, subcombinations, and substitutions may occur depending on design requirements and other factors. Any modifications, equivalent substitutions, improvements, and the like within the spirit and principles of the present disclosure should be included within the scope of protection of the present disclosure.

## Claims

1. A reconciliation method based on a blockchain, comprising:
acquiring a batch hash value fed onto the blockchain by an institution to be reconciled and a batch hash value fed onto the blockchain by a transaction reconciliation platform respectively, wherein the batch hash values are generated according to a reconciliation batch transaction record;
performing first comparison on the batch hash value fed onto the blockchain by the institution and the batch hash value fed onto the blockchain by the transaction reconciliation platform;
notifying the institution and the transaction reconciliation platform to feed shard hash values corresponding to the reconciliation batch transaction record onto the blockchain under a condition that a result of the first comparison shows that the batch hash value fed onto the blockchain by the institution and the batch hash value fed onto the blockchain by the transaction reconciliation platform are inconsistence, wherein the shard hash values are obtained by sharding the reconciliation batch transaction record, and generating, for each shard, a shard hash value of the shard according to transaction records comprised in the shard;
acquiring an inconsistent shard by performing second comparison on the shard hash values fed onto the blockchain by the institution and the shard hash values fed onto the blockchain by the transaction reconciliation platform;
notifying the institution and the transaction reconciliation platform to feed a record hash value corresponding to each transaction record comprised in the inconsistent shard onto the blockchain;
acquiring an inconsistent transaction record by performing third comparison on the record hash values fed onto the blockchain by the institution and the record hash values fed onto the blockchain by the transaction reconciliation platform; and
notifying the institution and the transaction reconciliation platform of the inconsistent transaction record.

2. The reconciliation method as claimed in claim 1, further comprising:
sending the inconsistent transaction record to an automatic error handling system by means of the transaction reconciliation platform, such that the automatic error handling system performs error handling by calling an error handling interface provided by the institution, and feeds back an error handling result to the transaction reconciliation platform.

3. The reconciliation method as claimed in claim 1 or 2, further comprising:
determining a classification to which the inconsistent transaction record belongs;
notifying the institution and the transaction reconciliation platform of the classification to which the inconsistent transaction record belongs; and
sending the classification to which the inconsistent transaction record belongs to the automatic error handling system by means of the transaction reconciliation platform.

4. The reconciliation method as claimed in claim 1, wherein the batch hash value is obtained by sequentially splicing the shard hash values corresponding to all shards comprised in the reconciliation batch transaction record; and
the shard hash value is obtained by sequentially splicing the record hash values obtained by performing hash operation on each transaction record comprised in the shard.

5. The reconciliation method as claimed in claim 1 or 4, wherein the transaction record has a transaction initiation time point, and the reconciliation batch transaction record is sorted and sharded based on the transaction initiation time point.

6. The reconciliation method as claimed in claim 1, wherein the shard hash are fed onto a blockchain node in a form of a list; and
performing comparison of the shard hash values of the blockchain node of the institution with the shard hash values of the transaction reconciliation platform comprises:
performing Cartesian product operation on a shard hash value list fed onto the blockchain by the institution and a shard hash value list fed onto the blockchain by the transaction reconciliation platform for comparison.

7. The reconciliation method as claimed in claim 1, wherein before the acquiring a batch hash value fed onto the blockchain by an institution to be reconciled and a batch hash value fed onto the blockchain by a transaction reconciliation platform respectively, the method further comprises:
feeding the batch hash value corresponding to the reconciliation batch transaction record onto the blockchain by means of the institution and the transaction reconciliation platform respectively; wherein
feed the batch hash value and the shard hash values onto the blockchain comprises:
calling a smart contract of a blockchain node to store the batch hash value and the shard hash values in an attribute of the smart contract of the blockchain node.

8. The reconciliation method as claimed in claim 1, wherein comparison of the batch hash values and comparison of the shard hash values are performed through a consensus algorithm.

9. A reconciliation method based on a blockchain, comprising:
triggering, in response to receiving shard hash values of data to be reconciled fed onto the blockchain by reconciliation participants, a smart contract to perform comparison on the shard hash values, wherein the smart contract is deployed on the blockchain in advance, and the shard hash values are obtained by performing hash operation on each shard after sharding the data to be reconciled;
notifying the reconciliation participants to feed record hash values of transaction records comprised in an inconsistent shard under a condition that a result of the comparison of the shard hash values shows inconsistence; and
triggering, in response to receiving the record hash values fed onto the blockchain by the reconciliation participants, the smart contract to perform comparison on the record hash values, so as to find an inconsistent transaction record, and generating a reconciliation result.

10. The reconciliation method as claimed in claim 9, further comprising:
generating a reconciliation result directly under a condition that the result of the comparison of the shard hash values shows consistence.

11. The reconciliation method as claimed in claim 9, wherein the reconciliation participants comprise a reconciliation institution and a transaction reconciliation platform; and the method further comprises:
sending the inconsistent transaction record to an automatic error handling system, such that the automatic error handling system calls the reconciliation institution to perform error handling and obtains an error handling result fed back by the reconciliation institution.

12. The reconciliation method as claimed in claim 11, wherein before the sending the inconsistent transaction record to an automatic error handling system, the method further comprises:
marking an error classification on the inconsistent transaction record according to a preset business rule; and
the sending the inconsistent transaction record to an automatic error handling system further comprises:
sending the error classification of the inconsistent transaction record to the automatic error handling system.

13. The reconciliation method as claimed in claim 12, wherein the preset business rule is implemented as an automatic error smart contract; and the marking an error classification on the inconsistent transaction record according to a preset business rule comprises:
calling the automatic error smart contract, and marking the error classification on the inconsistent transaction record in combination with a specific transaction scene and a failure reason.

14. The reconciliation method as claimed in claim 12, wherein the reconciliation institution performs error handling according to an error handling flow corresponding to the error classification of the inconsistent transaction record.

15. The reconciliation method as claimed in claim 9, wherein the transaction record has time information, and the data to be reconciled is sharded based on the time information.

16. The reconciliation method as claimed in claim 9, wherein the transaction records have ordered message identification numbers; and the shard hash values are obtained by sorting the transaction records of each shard incrementally according to the message identification numbers, and performing hash operation on the transaction records after sharding the data to be reconciled.

17. The reconciliation method as claimed in claim 9, wherein when an amount of the data to be reconciled is greater than a first threshold, a sharding time interval is decreased to increase the number of shards; and when the amount of the data to be reconciled is less than a second threshold, the sharding time interval is increased to decrease the number of shards, wherein the first threshold is greater than the second threshold.

18. A reconciliation method based on a blockchain, comprising:
feeding, by an institution to be reconciled and a transaction reconciliation platform, batch hash values corresponding to reconciliation batch transaction record onto the blockchain respectively, wherein the batch hash values are generated according to the reconciliation batch transaction record;
triggering a smart contract to respectively acquire the batch hash values fed onto the blockchain by the institution and the transaction reconciliation platform in response to a reconciliation processing instruction, and performing first comparison on the batch hash value fed onto the blockchain by the institution and the batch hash value fed onto the blockchain by the transaction reconciliation platform; notifying the institution and the transaction reconciliation platform to feed shard hash values corresponding to the reconciliation batch transaction record onto the blockchain under a condition that a result of the first comparison shows that the batch hash value fed onto the blockchain by the institution and the batch hash value fed onto the blockchain by the transaction reconciliation platform are inconsistence;
feeding the shard hash values by the institution and the transaction reconciliation platform onto the blockchain, wherein the shard hash values are obtained by sharding the reconciliation batch transaction record, and generating, for each shard, a shard hash value of the shard according to transaction records comprised in the shard;
acquiring, in response to receiving the shard hash values, an inconsistent shard by the smart contract performing second comparison on the shard hash values fed onto the blockchain by the institution and the shard hash values fed onto the blockchain by the transaction reconciliation platform; notifying the institution and the transaction reconciliation platform to feed a record hash value corresponding to each transaction record comprised in the inconsistent shard;
feeding, by the institution and the transaction reconciliation platform, the record hash values onto the blockchain;
acquiring, in response to receiving the record hash values, an inconsistent transaction record by the smart contract performing third comparison on the record hash values fed onto the blockchain by the institution and the record hash values fed onto the blockchain by the transaction reconciliation platform; and notifying the institution and the transaction reconciliation platform of the inconsistent transaction record.

19. The reconciliation method as claimed in claim 18, further comprising:
sending the inconsistent transaction record to an automatic error handling system by the transaction reconciliation platform, such that the automatic error handling system calls an error handling interface provided by the institution to perform error handling, and feeds back an error handling result to the transaction reconciliation platform; and
feeding the error handling result onto the blockchain by the transaction reconciliation platform.

20. The reconciliation method as claimed in claim 18, wherein after the institution and the transaction reconciliation platform feed onto the blockchain each time, data fed onto the blockchain by the institution is synchronized to a blockchain node of the transaction reconciliation platform based on a data synchronization function of the blockchain; and
the smart contract obtains the data fed onto the blockchain by the institution and the transaction reconciliation platform from the blockchain node of the transaction reconciliation platform.

21. A reconciliation apparatus based on a blockchain, comprising:
a batch hash acquiring module, configured to obtain a batch hash value fed onto the blockchain by an institution to be reconciled and a batch hash value fed onto the blockchain by a transaction reconciliation platform respectively, wherein the batch hash values are generated according to a reconciliation batch transaction record;
a batch hash comparing module, configured to perform first comparison on the batch hash value fed onto the blockchain by the institution and the batch hash value fed onto the blockchain by the transaction reconciliation platform;
a shard hash feeding module, configured to notify the institution and the transaction reconciliation platform to feed shard hash values corresponding to the reconciliation batch transaction record onto the blockchain under a condition that a result of the first comparison shows that the batch hash value fed onto the blockchain by the institution and the batch hash value fed onto the blockchain by the transaction reconciliation platform are inconsistence, wherein the shard hash values are obtained by sharding the reconciliation batch transaction record, and generating, for each shard, a shard hash value of the shard according to transaction records comprised in the shard;
a shard hash comparing module, configured to acquire an inconsistent shard by performing second comparison on the shard hash values fed onto the blockchain by the institution and the shard hash values fed onto the blockchain by the transaction reconciliation platform;
a record hash feeding module, configured to notify the institution and the transaction reconciliation to feed a record hash value corresponding to each transaction record comprised in the inconsistent shard onto the blockchain;
a record hash comparing module, configured to acquire an inconsistent transaction record by performing third comparison on the record hash values fed onto the blockchain by the institution and the record hash values fed onto the blockchain by the transaction reconciliation platform; and
a transaction record notifying module, configured to notify the institution and the transaction reconciliation platform of the inconsistent transaction record.

22. A reconciliation apparatus based on a blockchain, comprising:
a shard hash comparing module, configured to trigger, in response to receiving shard hash values of data to be reconciled fed onto the blockchain by reconciliation participants, a smart contract to perform comparison on the shard hash values, wherein the smart contract is deployed on the blockchain in advance, and the shard hash values are obtained by performing hash operation on each shard after sharding the data to be reconciled;
a detail hash acquiring module, configured to notify the reconciliation participants to feed record hash values of transaction records comprised in an inconsistent shard under a condition that a result of the comparison of the shard hash values shows inconsistence; and
a detail hash comparing module, configured to trigger, in response to receiving the record hash values fed onto the blockchain by the reconciliation participants, the smart contract to perform comparison on the record hash values, so as to find an inconsistent transaction record, and generate a reconciliation result.

23. A reconciliation system based on a blockchain, comprising an institution and a transaction reconciliation platform, wherein a smart contract is deployed on the transaction reconciliation platform;
the institution and the transaction reconciliation platform are configured to feed batch hash values corresponding to a reconciliation batch transaction record onto the bolckchain respectively; perform, when receiving a notification from the smart contract to feed shard hash values corresponding to the reconciliation batch transaction record onto the blockchain, feed the shard hash values onto the blockchain; and feed, when receiving a notification from the smart contract to feed a record hash value corresponding to each transaction record comprised in inconsistent shard onto the blockchain, the record hash values onto the blockchain, wherein the batch hash values are generated according to the reconciliation batch transaction record; and the shard hash values are obtained by sharding the reconciliation batch transaction record, and generating, for each shard, a shard hash value of the shard according to transaction records comprised in the shard; and
the smart contract is configured to acquire a batch hash value fed onto the blockchain by the institution and a batch hash value fed onto the blockchain by the transaction reconciliation platform respectively in response to a reconciliation processing instruction, and perform first comparison on the batch hash value fed onto the blockchain by the institution and the batch hash value fed onto the blockchain by the transaction reconciliation platform; notify the institution and the transaction reconciliation platform to feed shard hash values corresponding to the reconciliation batch transaction record onto the blockchain under a condition that a result of the first comparison shows that the batch hash value fed onto the blockchain by the institution and the batch hash value fed onto the blockchain by the transaction reconciliation platform are inconsistence; acquire an inconsistent shard in response to receiving the shard hash values and by performing second comparison on the shard hash values fed onto the blockchain by the institution and the shard hash values fed onto the blockchain by the transaction reconciliation platform; notify the institution and the transaction reconciliation platform to feed a record hash value corresponding to each transaction record comprised in the inconsistent shard; acquire an inconsistent transaction record in response to receiving the record hash values and by performing third comparison on the record hash values fed onto the blockchain by the institution and the record hash values fed onto the blockchain by the transaction reconciliation platform; and notify the institution and the transaction reconciliation platform of the inconsistent transaction record.

24. The reconciliation system as claimed in claim 23, further comprising an automatic error handling system, configured to call an error handling interface provided by the institution to perform error handling, and feed back an error handling result to the transaction reconciliation platform, wherein
the transaction reconciliation platform is further configured to send the inconsistent transaction record to the automatic error handling system, and receive the error handling result fed back by the automatic error handling system; and feed the error handling result onto the blockchain.

25. An electronic reconciliation device based on a blockchain, comprising:
one or more processors; and
a memory configured to store one or more programs; wherein
when the one or more programs are executed by the one or more processors, the one or more processors implement the method as claimed in any one of claims 1-20.

26. A computer-readable medium, storing a computer program, wherein the program implements the method as claimed in any one of claims 1-20 when executed by a processor.
